# EUROPÄISCHE PATENTSCHRIFT

(11) **EP 0 380 803 B1**
(45) Veröffentlichungstag und Bekanntmachung des Hinweises auf die Patenterteilung: **21.07.1993**
(21) Anmeldenummer: 89123516.0
(22) Anmeldetag: 20.12.1989
(51) Int. Cl.: H01M 2/26, H01M 6/10

(54) **Galvanisches Element**
Galvanic element
Elément galvanique

(30) Priorität: 30.01.1989 DE 3902648
(43) Veröffentlichungstag der Anmeldung: 08.08.1990
(73) Patentinhaber: VARTA Batterie Aktiengesellschaft, D-30405 Hannover (DE)
(72) Erfinder: Sauer, Hans, D-6270 Idstein-Walsdorf (DE); Krämer, Peter, D-6240 Königstein (DE)
(74) Vertreter: Kaiser, Dieter Ralf, Dipl.-Ing.

(56) Entgegenhaltungen:
- FR-A- 2 328 296
- US-A- 3 775 182
- PATENT ABSTRACTS OF JAPAN, Band 7, Nr. 107 (E-174), 11. Mai 1983; & JP-A-58 30 073 (MATSUSHITA) 22-02-1983
- PATENT ABSTRACTS OF JAPAN, Band 12, Nr. 261 (E-636), 22. Juli 1988; & JP-A-63 45 758 (TOSHIBA) 26-02-1988
- PATENT ABSTRACTS OF JAPAN, Band 12, Nr. 425 (E-681), 10. November 1988; & JP-A-63 164 170 (TOSHIBA) 07-07-1988
- PATENT ABSTRACTS OF JAPAN, Band 9, Nr. 140 (E-321), 14. Juni 1985; & JP-A-60 23 964 (HITACHI) 06-02-1985

## Beschreibung

Die Erfindung betrifft ein galvanisches Element mit einem spiralförmigen Elektrodenkörper, der durch Wickeln von bandförmigen positiven und negativen Elektroden unter Zwischenlage eines bandförmigen Separators hergestellt ist, mit einem Stromlollektor, welcher als Wickeldorn dient und mit dem die eine Elektrode elektrisch verbunden ist, mit einem metallischen Gehäuse zur Aufnahme der Spiralelektroden, mit welchem die andere Elektrode elektrisch verbunden ist sowie einem Deckel, der die Öffnung des Gehüses verschließt und der als Anschlußpol für eine Elektrode mit dem Stromkollektor elektrisch kontaktiert ist.

Bei der bis heute üblichen Fertigungstechnik für Elektrodenwickel ist der Wickeldorn in der Regel eine zum Einfädeln der Bandelektroden mit einem Längsschlitz versehene Stahlnadel von etwa 5 bis 7mm Durchmesser. Sie ist im allgemeinen fest mit der Wickelmaschine verbunden und hinterläßt, da sie an der Wickelmaschine zurückbleibt, nach Erzeugung des Elektrodenwickels in dessen Mitte einen freien Raum.

Da dieser Freiraum unter gewissen Umständen, beispielsweise bei Stoßbelastungen der Zelle, die Gefahr in sich birgt, daß es zu Verschiebungen des Wickels in Richtung seiner Längsachse oder auch zu gegenseitigen Versetzungen der Elektroden kommt, hat man diesem Nachteil durch Verwendung von Wickeldornen in Form von Kunststoffstäben abzuhelfen versucht, welche als sogenannter verlorener Kern zum dauernden Verbleib im Wickel bestimmt sind und so die Grundlage einer kompakten Anordnung des Elektrodensatzes bilden.

In beiden Fällen ist es jedoch notwendig, die einzelnen Wickelelektroden mit gesonderten Stromleitfahnen zu versehen und sie über diese an die äußeren Zellenpole, von denen einer in vorteilhafter Weise durch den Deckel gebildet sein kann, anzuschließen. Die Herstellung solcher Anschlüsse, die häufig über Drahtbrücken erfolgen muß, ist umständlich, wobei sich außerdem an fehlerhaften Verschweißungsstellen erhebliche Übergangswiderstände ausbilden können.
Günstiger ist die Anbindung zumindest einer Elektrodenpolarität an einen Anschlußpol mit Hilfe einer Polableiterplatte gemäß DE-C-2438 296, sofern die Wickelelektrode z.B. ein Sinterfolienband, über einen nicht mit aktiver Masse behafteten Rand verfügt, auf den sich die Platte an der Stirnseite des Wickels aufstützt.
Aus der DE-A-3412 890, der FR-A-1 328 296 und der JP-A-58 30 073 sowie aus der DE-C-3014 435 sind Wickelzellen bekannt, bei denen ein ursprünglich zur Herstellung des Elektrodensatzes verwendeter Wickelkern auch die Rolle der eben erwähnten Polableiterplatte als Stromkollektor für eine der Elektrodenpolaritäten über nimmt, während das Gehäuse der Polableiter für die Gegenelektrode ist. Letztere muß die Außenseite des Wickels bilden, so daß sie an der Gehäuseinnenwand anliegt.

Gemäß der zuletzt genannten Patenschrift ist dem flanschartig ausgeformten oberen Ende eines stabartigen Kollektors eine Spiralfeder aufgesteckt, welche gegen die Unterseite des metallischen Zellendeckels drückt und so die leitende Verbindung zwischen dem Kollektor und seinem Außenpol herstellt.
Ein solches Federteil verlangt bei der Montage besondere Aufmerksamkeit, vor allem Fingerspitzengefühl beim Positionieren auf dem Kollektorkopf, wobei Gefahr besteht, daß die Spirale durch unbeabsichtigtes Zusammendrücken vom Hantierungswerkzeug wegspringt.

Der Erfindung liegt die Aufgabe zugrunde, für ein galvanisches Element nach dem eingangs formulierten Gattungsbegriff einen möglichst einfachen Stromkollektor zu finden, der montagefreundlich ist, zugleich den Wickeldorn vertreten kann und von dem aus ein problemloser elektrischer Anschluß zum Gehäusedeckel als Außenpol für die mit dem Kollektor verbundene Elektrode möglich ist.

Die Aufgabe wird erfindungsgemäß gelöst durch ein galvanisches Element, wie es im Patentanspruch 1 angegeben ist.

Danach besitzt die erfindungsgemäße Wickelzelle als Stromkollektor für die eine Elektrode, die vorzugsweise die positive ist, eine geschlitzte Metallnadel, in welcher die Elektrode mit ihren Trägergerüst in der Mitte ihrer Bandlänge fest eingeklemmt ist. Das Kopfende der Nadel ist geschlossen und kann, um von der Wickelmaschine sicher gefaßt zu werden, in mannigfacher Weise geformt oder verdickt sein. Zweckmäßig ist die Schlitzlänge der Breite des Elektrodenbandes angepaßt, wodurch ein optimaler beidseitiger Kontakt des Trägergerüstes mit den Nadelschenkeln zustandekommt.

Gemäß einer bevorzugten Ausführungsform der Erfindung ist die geschlitzte Nadel ein Metallsplint mit einem zu einer Öse erweiterten geschlossenen Kopfende, wobei die beiden Schenke des Splints in diesem Fall auch unterschiedliche Längen besitzen können.

Zur Kontaktierung genügt es, den Kollektor bzw. Metallsplint auf das von aktiver Masse zuvor befreite Trägermaterial der Elektrode, im allgemeinen ein Streckmetall oder feinmaschiges Netz aus Ni, Ag, Ti oder nichtoxidierendem Stahl, einfach aufzustecken. Von Vorteil ist jedoch eine zusätzliche Punktverschweißung der beiden Schenkel über dem zwischenliegenden Trägernetz.
Erfindungsgemäß ist der Stromkollektor nicht an einem Ende der Bandelektrode, sondern etwa in der Mitte ihrer Bandlänge angebracht, so daß das Elektrodenband, von dem zur Kontaktierung mit dem Ableiter massefrei gehaltenen Mittelstreifen des Trägernetzes ausgehend, in zwei etwa gleichlange Kathodenabschnitte zerfällt. Folglich liegt auch der Wickelanfang für diese Elektrode in der Mitte des Bandes.
Da die geschlitzte Nadel nach dem Wickelvorgang im Elektrodenwickel verbleibt, stellt sie insoweit eine verlorene Wickelnadel dar, jedoch in der neuen Eigenschaft eines Stromkollektors, dessen Vorzüge im Falle der Verwendung eines neuen Metallsplints wegen der verschwindend kleinen Kosten dieses Massenartikels, seiner Einfachheit und problemlosen Montierbarkeit besonders überzeugen.

Zur Kontaktierung des Stromkollektors mit dem Gehäusedeckel ist erfindungsgemäß eine an der Innenseite des Gehäusedeckels befestigte Blattfeder vorgesehen, die von der Innenseite schräg nach unten absteht und in der fertig montierten Zelle dem Kollektorkopf mit elastischer Spannung aufliegt.

In einer besonders vorteilhaften Kontaktanordnung ist der Kollektor wiederum ein Metallsplint mit einer sein Kopfende bildenden Öse, während aus der Blattfeder ein Loch ausgestanzt ist, dessen Durchmesser jedoch kleiner als die Öse ist. Dadurch liegt die Blattfeder nur mit der Stanzkante des Loches auf der Öse auf, so daß sich ein sehr hoher spezifischer Anpreßdruck ergibt.

Diese Maßnahme ist geeignet, um selbst bei stärksten Erschütterungen der Zelle eine Desintegration der erfindungsgemäßen Kontaktanordnung zuverlässig zu verhindern. Für den Betrieb des erfindungsgemäßen galvanischen Elements verwendbare elektrochemische Systeme sind im allgemein Li-Systeme mit nichtwässrigen Elektrolyten. Als kathodenaktive Substanzen kommen Schwermetalloxide und -sulfide wie Ni(OH)₂, CuO, CrOₓ, FeS₂ oder MnO₂ infrage.

Die Herstellung der Kathodenmasse aus beispielsweise MnO₂ mit Zusätzen eines Bindemittels aus PTFE-Pulver und Graphit als Leitmaterial wird mittels eines einfachen Trockenmischverfahrens durchgeführt. Durch Einwalzen der Trockenmischung in ein Metallnetz oder Streckmetall als Trockenmaterial im kontinuierlichen Durchlauf erhält man das positive Elektrodenband. Aus diesem kann bereits vor dem Zerschneiden in die gewünschten Streifenlängen die Masse an den jeweils vorgesehenen Splint-Kontaktstellen wieder leicht aus dem Trägermaterial entfernt werden. Ein besonders geeignetes Hilfsmittel für diesen Zweck ist Preßluft.
Die "trockene" Arbeitsweise vermeidet nicht nur alle mit einer naßchemischen Masseaufbereitung verbundenen Nachteile, sondern hat als weiteren Vorteil auch eine größere Porosität der fertigen Walzelektrode zum Ergebnis, die es erlaubt, diese Elektrode im Vergleich zu einer im Naßverfahren hergestellten Elektrode mit einer midestens um 50% höheren Stromdichte zu belasten. Dies hat zur Konsequenz, daß bei vorgegebener gleicher Belastung die Elektrode nach dem Trockenmischverfahren mit weniger Aufwand an Trägermaterial, weniger Separatormaterial und in Verbindung mit einem geringeren Li-Überschuß mehr Kapazität liefert. Entsprechend geringer sind die Kosten.

Die bandförmige Lithiumelektrode ist auf die grundsätzlich gleiche Art wie bei den anderen bekannten Wickelzellen hergestellt und in einem schlauchförmigen Scheider aus Polyethylen oder Polypropylen mit verschweißten Rändern eingetascht.

Im folgenden werden die konstruktiven Besonderheiten des galvanischen Elements gemäß der Erfindung bei einer vorzugsweisen Ausführungsform näher erläutert.
- Figur 1: zeigt einen kompletten Elektrodensatz mit Splintableiter gemäß der Erfindung vor dem Wickeln
- Figur 2: zeigt die Aufspulung des Elektrodensatzes um den Metallsplint am Wickelbeginn.
- Figur 3: zeigt einen fertigen Elektrodenwickel im Schnitt. Figur 4 zeigt ein galvanisches Element gemäß der Erfindung im Aufriß.

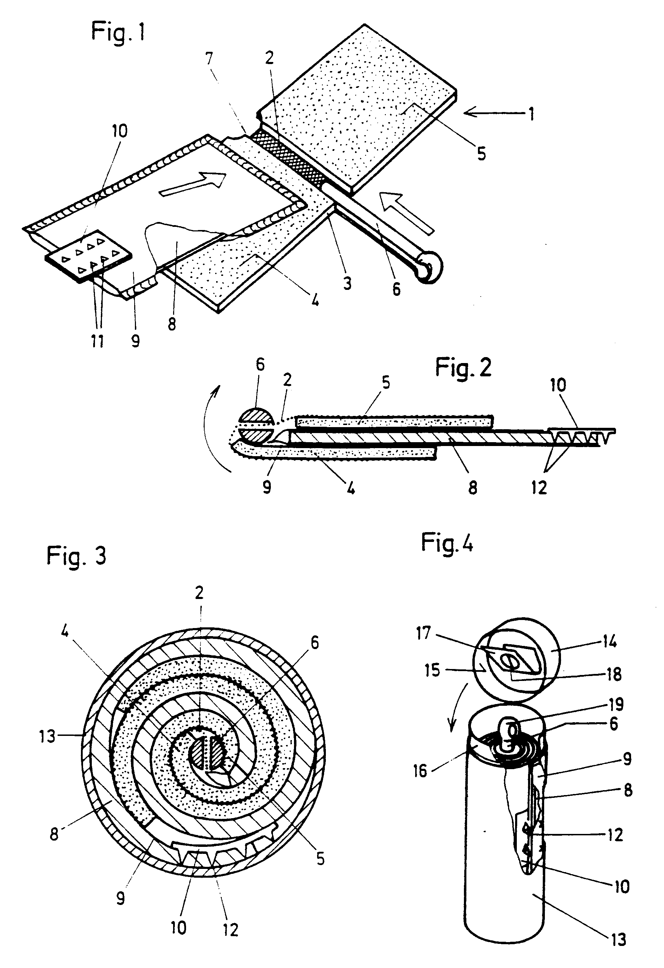

Nach Figur 1 ist das Trägernetz 2 einer positiven Bandelektrode 1 in der Bandmitte von der aufgewalzten positiven Masse 3 freigemacht, so daß die Bandelektrode aus den Kathodenhälften 4, 5 besteht, zwischen denen der Metallsplint 6 unter reibschlüssigem Kontakt auf das Trägernetz aufgeschoben und mit diesem gegebenenfalls auch noch punktverschweißt werden kann.
Durch eine Aussparung 7 an der Kathode ist das untere Ende des Ableiters durch ein Schneidwerkzeug leichter und ohne Beschädigung des Wickels zugänglich, als wenn ein über die Höhe des Wickels hinausgehender Überstand entfernt werden muß.
Der Metallsplint dient zunächst als Wickelnadel. Vor dem Wickeln wird die Bandelektrode 1 mit den Massebelegungen nach innen über der zwischengelegten Li-Elektrode 8, die mit der Vorderkante ihrer Separatorumhüllung 9 an die Wickelnadel anstößt, zusammengeklappt.
Die Länge der negativen Bandelektrode, zumindest aber die der Separatortasche, muß so bemessen sein, daß sie die Länge der positiven Elektrode 1 im zusammengeklappten Zustand um mindestens eine Umfangslänge des fertigen Wickels übertrifft.

Das Ende der negativen Elektrode ist mit einem Kontaktelement 10 in Gestalt eines dünnen Metallplättchens versehen, in das Löcher 11 unter Hinterlassung spitzer Stanzgrate 12 (in Figur 2 sichtbar) eingebracht sind, wobei die Stanzgratebeim Aufdrücken des Plättchens die Lithiumelektrode einschließlich der Separatorauflagen durchdringen. Bei ihrer späteren Positionierung im Gehäusebecher verkrallen sich die an der Unterseite herausstehenden Gratspitzen mit der Gehäusewand und verschaffen dem Lithium zu dieser einen guten elektrischen Kontakt.
Der besondere Vorteil, der mit der Aufteilung des Kathodenbandes in zwei Bandabschnitte und mit der Befestigung des Splintableiters in der Bandmitte verbunden ist, kommt u.a. beim Anwickeln zur Geltung. So wird aus Figur 2 deutlich, daß durch die Aufgliederung des Kathodenbandes in zwei dünne Teilhälften 4, 5 anstelle einer gleichlangen, aber doppelt so dicken Elektrodenplatte eine größere Flexibilität des Bandes erreicht wird, indem sich beide Teile gegeneinander verschieben können und ihre vorderen Enden so mit einer deutlichen Versetzung, die vom Separator 9 umhüllte Li-Elektrode 8 mit sich nehmend, von dem aufwickelnden Splint 6 erfaßt werden. Auf diese Weise wird die im Wickel wiederkehrende dreischichtige Elektrodenanordnung nach und nach während des Anwickelns aufgebaut, was einen engeren Wickelradius und eine bessere Raumausnutzung des Gehäusebechers gestattet. Bei einer dicken und von ihrem Ende her gewickelte Kathode ist die Gefahr des Abplatzens von aktiver Masse größer.
Die von der Mitte her gewickelte "Doppelkathode" hat ferner den Vorteil, daß sie nicht an der netzarmierten Seite entladen wird.

Der Wickelvorgang wird von Anfang bis Ende von einer Gehäuseschablone (nicht dargestellt) unterstützt, aus welcher der fertige Wickel ausgestoßen und unmittelbar in das bereitgehaltene Zellengehäuse überführt wird.

Figur 3 gibt eine Querschnittsdarstellung der erfindungsgemäßen Wickelzelle mit dem positiven Splintableiter 6 -zugleich Winckelnadel-, der Teilkathode 4, der Teilkathode 5, der in der Sparatorhülle 9 verpackten Li-Elektrode 8 und dem Gehäusebecher 13. Dabei ergibt sich im Wickel eine Lage der beiden Teilkathoden mit ihren Trägernetzen 5, der in der Sparatorhülle 9 verpackten Li-Elektrode 8 und dem Gehäusebecher 13. Dabei ergibt sich im Wickel eine Lage der beiden Teilkathoden mit ihren Trägernetzen Rücken an Rücken und mit ihren "Schichtseiten" der Li-Elektrode zugekehrt.

Die Figur läßt ferner die Kontaktierung der Li-Elektrode mit der Becherwand durch das Kontaktelement 10 erkennen, dessen Krallen 12 durch das Li-Band einschließlich Separatorumhüllung hindurchgedrückt sind.

Die Verdeckelung der Zelle erfolgt gemäß Figur 4 auf technisch sehr einfache Weise durch einen Hülsenkappenverschluß. Zu diesem Zweck ist entweder der Innenrand 15 der Kappe 14 oder die Außenseite des Becherkragens 16 mit einer Kunststoffbeschichtung versehen, so daß die nach Elektrolytbefüllung aufgedrückte Kappe den Becher mit festem Preßsitz flüssigkeitsdicht verschließt. Zugleich wir die in der Kappe 14 eingeschweißte Blattfeder 17, die sich mit dem Stanzgrat des Loches 18 auf die Öse 19 des Splints 6 auflegt, unter eine hohe Dauerspannung versetzt. Dadurch ist ein sicherer elektrischer Kontakt zwischen dem Splintableiter und der Metallkappe 14 als dem positiven Außenpol gewährleistet.

Durch die Aufrißdarstellung ist in der Figur ferner die Li-Elektrode 8 mit ihrer Separatorumhüllung 9 sowie das Kontaktelement 10 zu erkennen, dessen Stanzgrate 12 die Elektrode samt Separator von der Rückseite her durchdringen und ihren leitenden Kontakt zu Innenseite des Bechers 13 sicherstellen.

## Patentansprüche

1. Galvanisches Element mit einem spiralförmigen Elektrodenkörper, der durch Wickeln von bandförmigen positiven und negativen Elektroden unter Zwischenlage eines bandförmigen Separators hergestellt ist, mit einem Stromkollektor, welcher als Wickeldorn dient und mit dem die eine Elektrode elektrisch verbunden ist, mit einem metallischen Gehäuse zur Aufnahme der Spiralelektroden, mit welchem die andere Elektrode elektrisch verbunden ist sowie einem Deckel, der die Öffnung des Gehäuses verschließt und der als Anschlußpol für die eine Elektrode mit dem Stromkollektor elektrisch kontaktiert ist, dadurch gekennzeichnet daß der Stromkollektor (6) eine geschlitzte Metallnadel ist, welche auf das Trägergerüst der einen Elektrode (1) in deren Bandlängen-Mitte aufgesteckt ist.

2. Galvanisches Element nach Anspruch 1, dadurch gekennzeichnet, daß ein den Abstand zwischen dem Deckel (14) und dem Stromkollektor überbrückendes Kontaktglied in Form einer an der Deckel-Innenseite befestigten Blattfeder (17) vorgesehen ist, welches am Kopfende des Stromkollektors mit elastischer Spannung aufliegt.

3. Galvanisches Element nach Anspruch 2, dadurch gekennzeichnet, daß die geschlitzte Nadel von einem Metallsplint gebildet ist, dessen geschlossenes Kopfende als Öse (19) geformt ist.

4. Galvanisches Element nach Anspruch 3, dadurch gekennzeichnet, daß der Blattfeder ein Loch (18) ausgestanzt ist, dessen Durchmesser kleiner als die Öse des Metallsplints ist, so daß die Blattfeder lediglich mit der Stanzkante des Loches unter hohem spezifischen Anpreßdruck der Öse aufliegt.

5. Verfahren zur Herstellung eines galvanischen Elements nach einem der Ansprüche 1 bis 4, dadurch gekennzeichnet, daß das Trägergerüst der einen Elektrode in dem vom Stromkollektor zu erfassenden Bereich in der Bandlängen-Mitte von anhaftender aktiver Masse befreit wird und die geschlitzte Nadel auf den blanken Ausschnitt des Trägergerüstes aufgesteckt wird, daß die andere Elektrode, deren Bandlänge diejenige der einen Elektrode um mindestens eine Umfangslänge des fertigen Wickels übertrifft und die von einem Separator vollständig eingehüllt ist, mit der Vorderkante der Separatorumhüllung an die Nadel angelegt wird, daß die an der Nadel befestigte Elektrode mit den Massebelegungen nach innen über der anderen Elektrode zusammengeklappt wird und daß die dreischichtige Elektrodenanordnung aufgerollt wird.

6. Verfahren nach Anspruch 5, dadurch gekennzeichnet, daß die Schenkel der geschlitzten Nadel über dem zwischenliegenden Ausschnitt des Trägergerüstes punktverschweißt werden.

7. Verfahren nach einem der Ansprüche 5 oder 6, dadurch gekennzeichnet, daß die mit dem Stromkollektor verbundene Elektrode (1) die positive Elektrode ist.

8. Verfahren nach Anspruch 7, dadurch gekennzeichnet, daß das Material der positiven Elektrode MnO₂ ist.

9. Verfahren nach den Ansprüchen 7 oder 8, dadurch gekennzeichnet, daß die negative Elektrode eine Li-Elektrode ist.

10. Verfahren nach Anspruch 9, dadurch gekennzeichnet, daß die elektrischleitende Verbindung zwischen dem Lithium und dem Gehäusebecher durch ein Kontaktelement (10) hergestellt wird.

## Claims

1. Galvanic cell, having a spiral-shaped electrode body which is produced by winding strip-shaped positive and negative electrodes with the interposition of a strip-shaped separator, having a current collector which serves as a winding mandrel and to which one electrode is electrically connected, having a metal housing for receiving the spiral electrodes, to which housing the other electrode is electrically connected, and a cover which closes the opening of the housing and which is electrically contacted as a connection pole to the current collector for one electrode, characterized in that the current collector (6) is a slotted metal needle which is placed onto the support frame of one electrode (1) in the longitudinal centre of its strip.

2. Galvanic cell according to Claim 1, characterized in that there is provided a contact element, which bridges the spacing between the cover (14) and the current collector, in the form of a leaf spring (17) which is secured to the inside of the cover, which contact element bears on the top end of the current collector under resilient tension.

3. Galvanic cell according to Claim 2, characterized in that the slotted needle is formed by a metal split pin whereof the closed top end is formed as an eyelet (19).

4. Galvanic cell according to Claim 3, characterized in that there is punched in the leaf spring a hole (18) whereof the diameter is smaller than the eyelet of the metal split pin, so that the leaf spring bears merely by means of the punched edge of the hole at high specific contact pressure on the eyelet.

5. Method of manufacturing a galvanic cell according to one of Claims 1 to 4, characterized in that the support frame of one electrode is freed of adhering active material in the region to be detected by the current collector, in the longitudinal centre of the strip, and the slotted needle is placed onto the bared cutout in the support frame, in that the other electrode, whereof the strip length is greater than that of the one electrode by at least a peripheral length of the finished winding and which is completely encased by a separator, is laid by means of the front edge of the separator casing against the needle, in that the electrode secured to the needle, with the material coatings facing inward, is folded over onto the other electrode, and in that the three-layer arrangement of the electrodes is rolled up.

6. Method according to Claim 5, characterized in that the legs of the slotted needle are spot-welded above the intermediate cutout of the support frame.

7. Method according to one of Claims 5 or 6, characterized in that the electrode (1) which is connected to the current collector is the positive electrode.

8. Method according to Claim 7, characterized in that the material of the positive electrode is MnO₂.

9. Method according to Claims 7 or 8, characterized in that the negative electrode is an Li electrode.

10. Method according to Claim 9, characterized in that the electrically conductive connection between the lithium and the housing cup is produced by means of a contact element (10).

## Revendications

1. Elément galvanique avec un corps d'électrodes en forme de spirales, qui est réalisé par enroulement d'électrodes positives et négatives en forme de bande avec interposition d'un séparateur en forme de bande, avec un collecteur de courant, qui sert de mandrin d'enroulement et avec lequel l'une des électrodes est reliée électriquement, avec un boîtier métallique pour recevoir les électrodes en spirales, avec lequel l'autre électrode est reliée électriquement, ainsi qu'avec un couvercle qui ferme l'ouverture du boîtier et qui est en contact électrique avec le collecteur de courant, en tant que pôle de raccordement pour l'une des électrodes, élément galvanique caractérisé en ce que le collecteur de courant (6) est une aiguille métallique fendue qui est enfilée sur la structure porteuse de l'une (1) des électrodes dans le milieu de sa longueur de bande.

2. Elément galvanique selon la revendication 1, caractérisé en ce qu'il est prévu un organe de contact sous la forme d'un ressort à lame (17) fixé contre la face interne du couvercle, et qui ponte l'intervalle entre le couvercle (14) et le collecteur du courant, cet organe de contact s'appliquant par une contrainte élastique sur l'extrémité de tête du collecteur de courant.

3. Elément galvanique selon la revendication 2, caractérisé en ce que l'aiguille fendue est constituée par une goupille cylindrique fendue en métal dont l'extrémité de tête fermée revêt la forme d'un oeillet (19).

4. Elément galvanique selon la revendication 3, caractérisé en ce que, sur le ressort de lame, est poinçonné un trou (18) dont le diamètre est inférieur à l'oeillet de la douille métallique fendue, de sorte que le ressort à lame s'applique seulement sur l'oeillet par le bord de poinçonnage du trou et sous une pression d'application spécifique élevée.

5. Procédé pour la fabrication d'un élément galvanique selon une des revendications 1 à 4, caractérisé en ce que la structure porteuse de l'une des électrodes est débarrassée de la masse active qui y adhère dans la zone qui devra être saisie par le collecteur de courant, au milieu de la longueur de la bande, et l'aiguille fendue est enfilée sur la partie ainsi dénudée de la structure porteuse, en ce que l'autre électrode, dont la longueur de bande dépasse celle de la première électrode d'au moins une longueur périphérique de l'enroulement terminé, et qui est complètement enveloppée par un séparateur, est appliquée par le bord antérieur de l'enveloppement en séparateur contre l'aiguille, en ce que l'électrode fixée à l'aiguille avec les dépôts de masses vers l'intérieur, est repliée sur l'autre électrode et en ce que l'agencement en trois couches des électrodes est enroulé.

6. Procédé selon la revendication 5, caractérisé en ce que les branches de l'aiguille fendue sont soudées par points sur la partie de la structure porteuse interposée.

7. Procédé selon une des revendications 5 ou 6, caractérisé en ce que l'électrode (1) reliée au collecteur de courant est l'électrode positive.

8. Procédé selon la revendication 7, caractérisé en ce que le matériau de l'électrode positive est du MnO₂.

9. Procédé selon les revendications 7 ou 8, caractérisé en ce que l'électrode négative est une électrode au lithium.

10. Procédé selon la revendication 9, caractérisé en ce que la liaison électriquement conductrice entre le lithium et le godet du boîtier, est réalisée par un élément de contact (10).
